# EUROPÄISCHE PATENTSCHRIFT

(11) **EP 0 512 423 B1**
(45) Veröffentlichungstag und Bekanntmachung des Hinweises auf die Patenterteilung: **22.07.1998**
(21) Anmeldenummer: 92107412.6
(22) Anmeldetag: 30.04.1992
(51) Int. Cl.: C08G 59/10, D21H 17/55, C08G 59/14

(54) **Wässrige Lösungen von kationischen Polyamidoamin-Harzen**
Aqueous solutions of cationic polyamidoamine resins
Solutions aqueuses de résines polyamidoamine cationiques

(30) Priorität: 06.05.1991 DE 4114657
(43) Veröffentlichungstag der Anmeldung: 11.11.1992
(73) Patentinhaber: HOECHST AKTIENGESELLSCHAFT, 65926 Frankfurt am Main (DE)
(72) Erfinder: Marten, Manfred, W-6500 Mainz (DE); Pelzer, Roland, Dr., W-6000 Frankfurt/Main 60 (DE)

(56) Entgegenhaltungen:
- EP-A- 0 349 935
- DE-A- 3 708 544

## Beschreibung

Aus DE-A-11 77 824 ist es bekannt, Polyamine mit mindestens drei Aminogruppen mit C₃-C₁₀-Dicarbonsäuren umzusetzen und die so erhaltenen Polyamide mit Epichlorhydrin in wasserlösliche Kondensationsprodukte zu überführen. Dabei kann das Epichlorhydrin in einem Molverhältnis zu den sekundären Aminogruppen des Polyamids von etwa (0,5 bis 1,8) : 1 verwendet werden. Die gewonnenen Produkte können zur Verbesserung der Naßfestigkeit von Papier eingesetzt werden. Produkte dieser Art sind auch aus DE-A-22 29 219, DE-A-22 57 271, DE-A-29 38 588, DE-A-29 49 870 und DE-A-37 08 544, DE-A-17 20 905, DE-A-17 71 043 und DE-A-19 06 450, EP-A-0 131 200 und EP-A-0 126 176 und US-A-29 26 154 und US-A-33 32 901 bekannt.

Weiterhin ist bekannt (z. B. aus GB-A-865.727), daß solche wäßrigen Kondensationsprodukte, hergestellt aus Polyamidoaminen und Epichlorhydrin, unter anderem Chlorhydrin-Struktureinheiten enthalten. Demzufolge können Polyamidoamin-Epichlorhydrin-Harze einen erheblichen Anteil an organisch gebundenem Chlor aufweisen. Diese Halogenhydrin-Reaktivgruppen sind laut Aussage der DE-A-37 08 544 notwendig, um ausreichend vernetzungsfähige und lagerstabile Produkte zu erhalten.

Die Halogenhydrin-Gruppen-enthaltenden Harze weisen zwar aufgrund ihrer kationischen Ladung eine hohe Affinität zur hydratisierten Cellulose auf, lagern sich aber bei der Verwendung als Naßfestmittel nicht vollständig an die Papierfaser an. Je nach anwendungstechnischen Bedingungen wie Stoffdichte- und Zusammensetzung gelangen Anteile der Produkte in das Abwasser und tragen zu dessen Belastung mit organisch gebundenem Chlor bei. Durch Umweltschutzauflagen ist es nunmehr aber erforderlich, Papierharze mit einem möglichst niedrigen organisch gebundenen Chlorgehalt bereitzustellen.

Aus EP-A-0 349 935 sind lagerstabile, wäßrige Harzlösungen bekannt mit einem pH-Wert von höchstens 7, enthaltend als Harz ein wasserverdünnbares Polyamidoamin-Epichlorhydrin-Harz (A), erhalten durch Umsatz eines wasserverdünnbaren, basischen Polyamidoamins (B), bestehend aus einer Säurekomponente (B₁), und einer Aminkomponente (B₂), mit Epichlorhydrin, wobei der Gehalt an organisch gebundenem Chlor in dem Harz (A) höchstens 4 Gew.-% beträgt und wobei die Komponente (B₂) - falls die Säurekomponente (B₁) eine aliphatische oder aromatische Carbonsäure oder deren funktionelle Derivate, gegebenenfalls in Abmischung mit einer Aminocarbonsäure oder deren Lactamen darstellt - aus einem Gemisch aus Polyaminen und Alkanolmonoaminen besteht.

Aus dem Beispiel 6 der EP-A-0 349 935 ist zu entnehmen, daß bei pH 4 lagerstabile Produkte mit einem organisch gebundenen Chlorgehalt von 2,8 % bezogen auf Harz (A) erhalten werden. In dem Beispiel 8 der gleichen Patentschrift dagegen mit einem Chlorgehalt von 1,0 %, bezogen auf Harz (A), ist eine Ansäuerung auf pH 1,75 erforderlich, um eine ausreichende Lagerstabilität zu erreichen.

Die niedrige pH-Einstellung ist bei der Papierverarbeitung aber unerwünscht, da größere Mengen Alkali für die Neutralisation eingesetzt werden müssen. Außerdem zeigen solche stark sauren Harze einen relativ schnellen Leistungsabfall bei der Lagerung.

Die Produkte gemäß EP-A-0 349 935 sind jedoch bei einem pH-Wert von ca. 4 nur dann hinreichend lagerstabil, wenn sie einen erhöhten Chlorgehalt (ca. 1,5 %) aufweisen. Bei den Produkten gemäß dieses Standes der Technik gelingt es also immer nur, von allen geforderten Eigenschaften (pH von ca. 4, Chlorgehalt unter 1 %, Lagerstabilität) zwei dieser Eigenschaften auf Kosten der dritten Eigenschaft zu optimieren.

Der Erfindung lag die Aufgabe zugrunde, alle drei Erfordernisse zu erfüllen und bei pH-Werten größer 3 lagerstabile, kationische Verbindungen aufzufinden, die den gebräuchlichen Produkten nach dem Stand der Technik in der Naßfestwirksamkeit ebenbürtig sind und gleichzeitig deutlich weniger, das heißt weniger als 0,8 % bezogen auf Harz (A), organisch gebundenes Chlor enthalten.

Überraschenderweise wurde nun gefunden, daß durch die erfindungsgemäße Nachreaktion von mit anorganischen Basen behandelten Halogenhydringruppenhaltigen Verbindungen mit einem wasserlöslichen aliphatischen, cycloaliphatischen oder araliphatischen Mono- oder Polyamin mit tertiären, sekundären und gegebenenfalls primären Aminogruppen oder Ammoniak oder Gemischen hieraus und anschließender Zugabe von Säure auf einen pH-Wert von höchstens 7 lagerstabilen Verbindungen erhalten werden, die erheblich weniger organisch gebundenes Chlor aufweisen und ähnlich hohe Naßfestwirksamkeiten ergeben wie die Produkte gemäß dem Stand der Technik.

Gegenstand der Erfindung sind wäßrige Harzlösungen, enthaltend ein wasserverdünnbares Polyamidoamin-Epichlorhydrin-Harz (A) mit einem Gehalt an organisch gebundenem Chlor von weniger als 0,8 %, erhältlich durch
a) Umsetzung eines wasserverdünnbaren, basischen Polyamidoamins (B), mit Epichlorhydrin,
b) Reaktion des so erhaltenen Harzes mit einer anorganischen Base und anschließend mit
c) einem wasserlöslichen organischen Mono- oder Polyamin oder mit Ammoniak oder deren Gemischen und anschließender
d) Zugabe einer Säure, daß ein pH-Wert von 1 bis 7 erreicht wird.

Der Gehalt an Hart (A) in der erfindungsgemäßen Lösung liegt im allgemeinen zwischen 8 und 25 Gew.-%, vorzugsweise 10 und 15 Gew.-%, bezogen auf die Lösung. Daneben enthält diese Harzlösung geringe Menge an anorganischen Stoffen (von der Basenbehandlung und der anschließenden Neutralisation) sowie gegebenenfalls bis 0,5 Gew.-%, vorzugsweise 0,05 bis 0,2 Gew.-%, an fungizid wirkenden Mitteln, wie Sorbinsäure bzw. Kaliumsorbat sowie gegebenenfalls weiter Additive, wie zum Beispiel Entschäumungsmittel.

Das Harz (A) besitzt im allgemeinen ein mittleres Molekulargewicht Mₙ von mindestens 500, vorzugsweise von mindestens 1000 und insbesondere von 1000 bis 300000.

Das wasserlösliche Polyamidoamin (B) besitzt im allgemeinen ein mittleres Molekulargewicht Mₙ (bestimmt über die Carboxylendgruppen) von mindestens 500, vorzugsweise mindestens 1000 und insbesondere 2000 bis 20000; die Aminzahl liegt zumeist zwischen 200 und 400, vorzugsweise zwischen 250 und 350 mgKOH/g und die Säurezahl zwischen 0 und 50, vorzugsweise 10 und 30 mgKOH/g.

Polyamidoamine (B), welche die erfindungsgemäßen Bedingungen erfüllen, sind beispielsweise in der DE-A-17 77 824, der GB-A-865.727, den US-A-4.075.177 und 4.336.835, der DE-A-33 23 732 und der EP-A-00 31 899 beschrieben, auf die hier Bezug genommen wird.

Bevorzugt sind dabei die entsprechenden Produkte gemäß der DE-A-33 23 732, soweit sie unter den vorliegenden Rahmen fallen.

Generell werden derartige Polyamidoamine (B) durch Umsetzung einer Säurekomponente (B₁), wie Dicarbonsäuren oder deren funktionellen Derivaten sowie von ω-Aminocarbonsäuren oder deren Lactamen mit einer Aminkomponente (B₂), wie Polyaminen, erhalten, wobei diese im Gemisch mit Alkanolmonoaminen vorliegen können. Diese Polyamine enthalten dabei mindestens zwei primäre Aminogruppen und vorzugsweise eine sekundäre und/oder tertiäre Aminogruppe. Das Mengenverhältnis der Komponenten ist dabei so zu wählen, daß im resultierenden Polyamidoamin (B) noch eine genügende Zahl an basischen (d. h. mit Epichlorhydrin reaktiven) Aminogruppen vorhanden ist, keine Gelierung bei der Reaktion eintritt und das Molekulargewicht von (A) in dem angegebenen Bereich liegt.

Bei den Polyamidoaminen (B) handelt es sich beispielsweise um Umsetzungsprodukte von
a) gesättigten oder olefinisch-ungesättigten aliphatischen C₃-C₁₀-Dicarbonsäuren oder deren funktionellen Derivaten bzw. mindestens 3 C-Atome enthaltenden ω-Aminocarbonsäuren oder deren Lactamen mit
b1) aliphatischen Polyaminen, die mindestens zwei primäre und mindestens eine weitere, und zwar sekundäre und/oder tertiäre Aminogruppe enthalten, oder
b2) einem Gemisch der Polyamine b1) mit
c1) Polyaminen, die mindestens eine primäre und gegebenenfalls mindestens eine sekundäre Aminogruppe enthalten und nicht unter die Definition b1) fallen, wobei die zusätzlichen Polyamine in solchen Mengen verwendet werden können, daß deren Anteil an primären Aminogruppen, bezogen auf die Gesamtmenge der primären Aminogruppen, 70 %, vorzugsweise 50 % und insbesondere 30 %, nicht übersteigt, und/oder gegebenenfalls
c2) Alkanolmonoaminen mit 2 bis 20 C-Atomen, vorzugsweise 2 bis 6 C-Atomen und 1 bis 3, vorzugsweise 1 oder 2 OH-Gruppen und insbesondere mit einer OH-Gruppe. Vorzugsweise besitzen diese Alkanolmonoamine die weiter unten angegebene Formel (II).

Als wasserlösliche Polyamidoamine (B) kommen insbesondere in Betracht:
1. Umsetzungsprodukte von a) gesättigten aliphatischen C₃-C₁₀-Dicarbonsäuren, wie Bernsteinsäure, Glutarsäure, Adipinsäure, Sebazinsäure, Malonsäure oder deren funktionellen Derivaten, wie Anhydriden und Estern, wobei die drei erstgenannten Säuren bevorzugt sind, mit den vorstehend unter b) genannten Gemischen von Polyaminen mit Alkanolmonoaminen.
2. Umsetzungsprodukte von solchen gesättigten modifizierten Dicarbonsäuren bzw. deren Derivaten, die durch Anlagerung von aliphatischen, cycloaliphatischen, araliphatischen oder heterocyclischen Polyaminen, die mindestens zwei Aminogruppen und zwar primäre und/oder sekundäre enthalten an α,β-olefinisch-ungesättigte Carbonsäureester, deren Alkoholrest 1 bis 8, vorzugsweise 1 bis 3 C-Atomen hat, wie Acrylsäureethylester und Methacrylsäuremethylester, erhalten und dann mit den vorstehend unter b1)/c1) genannten Polyaminen bzw. deren Gemischen, gegebenenfalls in Abmischung mit Alkanolmonoaminen, umgesetzt werden.
3. Umsetzungsprodukte von mindestens drei Kohlenstoffatomen enthaltenden ω-Aminocarbonsäuren oder deren Lactamen, z. B. 6-Aminocapronsäure und 8-Aminocaprylsäure bzw. 6-Caprolactam und 8-Capryllactam, mit den vorstehend unter b) genannten Gemischen von Polyaminen mit Alkanolmonoaminen.
4. Umsetzungsprodukte von olefinisch ungesättigten Dicarbonsäuren, wie Maleinsäure oder Fumarsäure bzw. deren funktionellen Derivaten, wie Anhydriden oder Estern, mit den vorstehend unter b1)/c1) genannten Polyaminen bzw. deren Gemischen, gegebenenfalls in Abmischung mit Alkanolmonoaminen.
5. Solche Umsetzungsprodukte, denen außer den unter 1. genannten gesättigten, aliphatischen C₃-C₁₀-Dicarbonsäuren und den unter 4. genannten ungesättigten Dicarbonsäuren noch ω-Aminocarbonsäuren oder deren Lactame des unter 3. angeführten Typs und außer den unter b1) angeführten Polyaminen noch mindestens eine primäre und gegebenenfalls sekundäre Aminogruppe, also z. B. eine primäre oder eine sekundäre Aminogruppe, enthaltende aliphatische, cycloaliphatische, araliphatische oder heterocyclische Polyamine und Alkanolamine zugrunde liegen. Hierbei sind diejenigen Polyamidoamine zu bevorzugen, denen außer den vorstehend unter b1)/c1) genannten Polyaminen bzw. deren Gemischen, gegebenenfalls in Abmischung mit Alkanolmonoaminen und außer den gesättigten C₃-C₁₀-Dicarbonsäuren noch ω-Aminocarbonsäuren oder deren Lactame des unter 3. angeführten Typs zugrunde liegen.

Umsetzungsprodukte vom Typ 1) unter Verwendung von Diethylentriamin, Triethylentetramin und Tetraethylenpentamin als Polyamin und 2-Aminoethanol als Alkanolmonoamin sind besonders bevorzugt.

Als Polyamine b1) und c1) kommen beispielsweise solche der Formel (I) 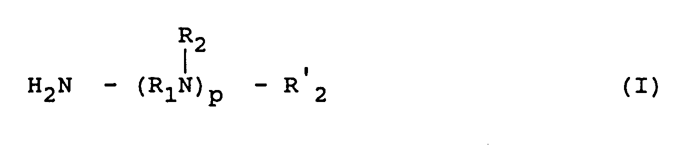 in Betracht, in der
- p: Null oder eine ganze Zahl von 1 bis 6, vorzugsweise 1 bis 4 ist,
- R₁: einen zweiwertigen, vorzugsweise nichtaromatischen Kohlenwasserstoffrest mit 2 bis 18 C-Atomen, vorzugsweise einen verzweigten oder unverzweigten Alkylenrest mit 2 bis 10 C-Atomen, insbesondere mit 2 bis 6 C-Atomen, oder einen Cycloalkylenrest mit 5 bis 12 C-Atomen, vorzugsweise 6 bis 10 C-Atomen, oder einen Aralkylenrest mit 7 bis 12 C-Atomen, vorzugsweise 8 bis 10 C-Atomen darstellt und R₂, R'₂ unabhängig voneinander für H oder einer der beiden Reste für

R₁ - NR₃R₄

stehen, worin
- R₁: die gleiche Bedeutung wie vorstehend hat und
- R₃ und R₄: entweder unabhängig voneinander für H, (C₁-C₂₀)-Alkyl, vorzugsweise (C₁-C₆)-Alkyl, stehen, wobei diese Alkylreste auch Hydroxygruppen tragen können.

Als Polyamine b1) seien z. B. genannt Methyl-bis-(3-aminopropyl)-amin, Ethyl-bis-(3-aminopropyl)-amin, N-(3-Aminopropyl)-tetramethylendiamin, N,N'-Bis-(3-aminopropyl)-tetramethylendiamin, Polyalkylenpolyamine, wie Dipropylen-(1,2)-triamin, Bis-(3-amino-propyl)-amin, Tripropylen-(1,2)-tetramin und vor allem Diethylentriamin, Triethylentetramin und Tetraethylenpentamin.

Polyamine c1) sind beispielsweise: Ethylendiamin, Propylendiamin, 1-Amino-3-methylamino-propan, 2-Methylpentamethylendiamin, Pentamethylendiamin, Hexamethylendiamin, Trimethylhexamethylendiamin, Neopentyldiamin, Octamethylendiamin, Dioxadodecandiamin, cycloaliphatische Diamine wie 1,2-, 1,3- oder 1,4-Cyclohexandiamin, 4,4'-Methylen-bis-cyclohexylamin, Isophorondiamin, Menthandiamin, 4,4'-Diamino-3,3'-dimethyl-di-cyclohexylmethan, 3-Aminomethyl-1-(3-aminopropyl-1-methyl)-4-methylcyclohexan, N-Methylethylendiamin, N-Aminoethylpiperazin, 1,3-Bis-aminomethylbenzol.

Als Alkanolmonoamine sind zum Beispiel solche der Formel

H₂N-R₁-OH (II)

geeignet, in der R₁ die obige Bedeutung hat, wie 2-Aminoethanol, 1-Amino-2-propanol, 3-Amino-1-propanol, 2-Amino-1-butanol, 4-Amino-1-butanol, 5-Amino-1-pentanol, 6-Amino-1-hexanol und deren Isomere, deren Kohlenwasserstoffrest verzweigt ist oder die die Aminogruppe und/oder die Hydroxylgruppe an einem primären oder sekundären C-Atom tragen; ferner solche, die sich von cyclischen Kohlenwasserstoffresten, vorzugsweise mit 5-7 C-Atomen, ableiten.

Die zur Erzielung wasserlöslicher Polyamidoamine (B) mit optimalen Eigenschaften einzuhaltenden Mengenverhältnisse der in Betracht kommenden Komponenten lassen sich durch Vorversuche leicht ermitteln.

Im allgemeinen ist die Mol-Menge an Dicarbonsäure oder deren funktionelle Derivate zu Polyamin/Alkanolmonoamin so, daß das Verhältnis von Carboxylgruppen zu der Summe von primären NH₂-Gruppen 1 : (0,8 - 1,4), vorzugsweise 1 : (0,95 - 1,1) beträgt. Im Falle von Mischungen von Polyaminen und Alkanolmonoaminen liegt das Verhältnis ihrer Molmengen bei 0,6 : 0,4 bis 0,99 : 0,01, vorzugsweise 0,8 : 0,2 bis 0,95 : 0,05.

Die Herstellung der Polyamidoamine (B) kann in üblicher Weise erfolgen, z. B. durch mehrstündiges Erhitzen der entsprechenden Komponenten unter Ausschluß von Sauerstoff auf Temperaturen von 125 bis 250 °C, vorzugsweise von 140 bis 180 °C, zunächst unter gewöhnlichem Druck und dann unter vermindertem Druck, wobei zur Vermeidung der Dunkelfärbung der Polyamide geringe Mengen an Hydrazinhydrat oder Hydraziden zugesetzt werden können. Die Reaktionszeit hängt von den angewendeten Temperaturen und Drucken ab und liegt im allgemeinen zwischen 4 und 10 Stunden.

Das Verhältnis der Mol-Menge Epichlorhydrin zur Summe der Äquivalente an freien basischen Aminogruppen im Polyamidoamin (B) beträgt 0,6 : 1 bis 4 : 1, vorzugsweise 1 : 1 bis 1,4 : 1. Unter freien basischen Aminogruppen sind primäre, sekundäre oder tertiäre Aminogruppen zu verstehen. Zum Begriff "Äquivalente" vgl. Pure Appl. Chem. 50 (1978), S. 327 - 338, bes. S. 337.

Die Menge an Base beträgt 0,1 bis 1,0 Mol, vorzugsweise 0,1 bis 0,6 Mol pro Mol eingesetztes Epichlorhydrin. Die Menge an organischen Mono- oder Polyaminen beträgt 0,01 bis 4, vorzugsweise 0,1 bis 1 basische Amin-Äquivalente pro Mol Epichlorhydrin.

Als organische Basen können unter anderem eingesetzt werden: Alkalihydroxide, bevorzugt Natrium- und Kaliumhydroxid, Carbonate, Bicarbonate, Erdalkalihydroxide, wie Calciumhydroxid, weiterhin Benzyltrimethylammoniumhydroxid, Tetramethylammoniumhydroxid oder entsprechende Gemische.

Als wasserlösliche organische Mono- für die erfindungsgemäße Nachreaktion kommen vorzugsweise Verbindungen der Formeln III

NR₁R₂R₃ (III)

infrage, worin R₁, R₂ und R₃ unabhängig voneinander Wasserstoff oder einen aliphatischen, cycloaliphatischen oder araliphatischen Alkyl- oder Hydroxylalkylrest mit 1 bis 20 C-Atomen, der durch Heteroatome wie Sauerstoff und Schwefel unterbrochen sein kann.

Tertiäre Monoamine der Formel III sind zum Beispiel folgende Verbindungen: Trimethylamin, Triethylamin, Tri-n-propylamin, Triisopropylamin, Tributylamin, N-N-Dimethylethylamin, N,N-Dimethyl-isopropylamin, N,N-Dimethylcyclohexyl-amin, Benzyldimethylamin, Benzyldiethylamin, N-Methylmorpholin, N-Methylpiperidin, Triethanolamin, Dimethylethanolamin, Diethylethanolamin, Diisopropylethanolamin, Dibutylethanolamin, Methyl-diethanolamin, Butyldiethanolamin, Triisopropanolamin, Dimethylisopropanolamin, Diethylisopropanolamin, Dimethylpropanolamin, Diethylpropanolamin, Methyldiisopropanolamin, Dimethylneopentanolamin, 6-Dimethylamino-1-hexanol, sekundäre Monoamine wie zum Beispiel: Dimethylamin, Diethylamin, Dipropylamin, Diisopropylamin, Di-n-butylamin, Di-isobutylamin, Di-sek.butylamin (N-(1-Methylpropyl)-2-butanamin), Di-n-Pentyl-amin, Di-hexylamin, Di-2-ethyl-hexylamin, Methyl-ethylamin, Methyl-propylamin, Methyl-butylamin, Ethyl-isopropylamin, Methyl-iso-butylamin, Ethyl-butylamin, N-n-Propyl-s-butylamin, Di-2-methylbutylamin, N-Methyl-cyclohexylamin, N-Ethyl-cyclohexylamin, N-Butyl-cyclohexylamin, Dicyclohexylamin, Di-2-methoxyethylamin, Diethanolamin, Di-n-propanolamin, Di-iso-propanolamin, N-Methyl-ethanolamin, N-Ethyl-ethanolamin, N-Methyl-isopropanolamin, Cyclohexylethanolamin, Morpholin, Pyrrolidin, primäre Monoamine wie zum Beispiel: Methylamin, Ethylamin, Propylamin, Isopropylamin, n-iso- und sek.Butylamin, t-Butylamin, n-Pentylamin, 3-Amino-pentan, 3-Methyl-1-butanamin, 2-Methyl-2-butanamin, n-Hexylamin, 3-Amino-3-methylpentan, 2-Ethylhexylamin, 3-Methyl-1-butanamin, 3-Methyl-2-butanamin, 1-Methyl-1-butanamin, 2-Ethyl-1-butanamin, 2-Methoxyethylamin, 2-Ethoxyethylamin, 3-Methoxypropylamin, 3-Ethoxypropylamin, 3-(2-Methoxyethoxy)-propyl-amin, Cyclopropanamin, Cyclopentylamin, Cyclohexylamin, 2-Methyl-cyclohexylamin, 1- und 2-Phenylethylamin, Benzylamin, 4-Methoxybenzylamin, 1-Methyl-3-phenylpropylamin, 2-Aminoethanol, 1-Amino-2-propanol, 3-Amino-1-propanol, 2-Amino-1-butanol, 2-Amino-3-pentanol, Polyhydroxymonoamine wie 2-Amino-2-methyl-1,3-propandiol, 2-Amino-2-ethyl-1,3-propandiol und 2-(2-Aminoethoxy)-ethanol.

Als wasserlösliche organische Polyamine für die erfindungsgemäße Nachreaktion kommen vorzugsweise die folgenden Verbindungen: 1,4-Diazabicyclo(2.2.2)octan, N,N,N', N'-Tetramethylethandiamin, N,N,N',N'-Tetramethyl-1,3-propandiamin, N,N,N',N'-Tetramethyl-1,6-hexandiamin, N,N,N',N'-Tetramethyldiaminodiethylether, N,N,N',N'-Pentamethyldiethylentriamin, Ethylendiamin, N,N'-Dimethyl-1,2-ethandiamin, N-Methyl-1,2-ethandiamin, N-Ethyl-1,2-ethandiamin, N,N-Diethyl-1,2-ethandiamin, N-(2-Hydroxyethyl)1,2-ethandiamin, 1,2-Diaminopropan, 1,3-Diaminopropan, 2-Hydroxy-1,3-diaminopropan, 3-Amino-1-methylaminopropan, N,N-Dimethyl-1,3-propandiamin, N,N'-Dimethyl-1,3-propandiamin, N,N-Diethyl-1,3-propandi-amin, N-Cyclohexyl-1,3-propandiamin, 2,2-Dimethyl-1,3-propandiamin, 1,3-Diaminobutan, 1,4-Diaminobutan, 1,3-Bis-(2-hydroxy-ethylamino)propan, 1,4-Bis-methylaminobutan, N,N-Diethyl-1,4-pentandiamin, 2-Methyl-1,5-pentandiamin, 1,5-Pentandiamin, 1,6-Diaminohexan, 2,2,4- und 2,4,4-Trimethyl-1,6-hexandiamin, 1,2-, 1,3- und 1,4-Diaminocyclohexan, Menthandiamin, Piperazin, 3,5,5-Trimethyl-3-aminomethyl-cyclohexylamin, (Isophorondiamin), 4,4'-Methylen-bis-cyclohexylamin, 4,4'-Methylen-bis-(2-methylcyclohexylamin), Bis-(2-aminoethyl)-ether, 2,2'-Bis-methylaminodiethyl-ether, Bis-(3-aminopropyl)-ether, Bis-(3-aminopropyl)-sulfid, 4,9-Dioxadodecan-1,12-diamin, 4,7,10-Trioxatridecan-1,13-diamin, 1,3-Bisaminomethylbenzol (m-Xylylendiamin), TCD-Diamin (Bis(amino-methyl)tricyclodecan), Diethylentriamin, Dipropylentriamin, Tetraethylenpentamin, Pentaethylenhexamin, Tripropylentetramin, höhere Polyalkylenpolyamine, Methyl-bis-(3-aminopropyl)-amin, Dihexamethylentriamin, Aminoethylpiperazin, 3-(2-Aminoethyl)amino-propylamin, N,N'-Bis-(3-aminopropyl)ethylendiamin, Ethyl-bis-(3-aminopropyl)-amin, 2-Hydroxyethyl-bis-(3-aminopropyl)-amin, N-(3-Aminopropyl)-tetramethylendiamin, N,N'-Bis-(3-aminopropyl)-tetramethylendiamin, 1,3-Bis-(2-aminoethylamino)-propan, 3-(3-Diethyl-amino-propylamino)-propylamin, 2,2'-Bis-(2-amino-ethylamino)-diethylether, 1,6-Bis-(2-amino-ethylamino)-hexan, 1,6-Bis-(3-amino-propylamino)-hexan, Bis-(6-amino-n-hexyl)amin, Polyalkylenpolyamine, Polyethylenimine oder Gemische hieraus.

Als Polyamine in der Stufe b) kommen insbesondere auch Polyamidoamine infrage. Als Polyamidoamine werden hierbei die gleichen Polyamidoamine genommen, wie zuvor als Komponente (B) erwähnt und beschrieben.

Die Herstellung der Reaktionsprodukte nach dem erfindungsgemäßen Verfahren kann in der Weise erfolgen, daß man die Polyamidoamine (B) und Epichlorhydrin in einem ersten Reaktionsschritt bei einer Konzentration der Reaktionsteilnehmer von etwa 25 bis 50, vorzugsweise 35 bis 45 % und bei einer Temperatur zwischen 25 und 95 °C, vorzugsweise 40 bis 75 °C, solange reagieren läßt, bis die Viskosität einer 40%igen Lösung (bestimmt bei 25 °C) etwa 100 bis 600, vorzugsweise 200 bis 400 mPa.s beträgt. Anschließend setzt man diese Lösung in einem zweiten Reaktionsschritt mit einer wäßrigen Lösung einer anorganischen Base, die in einer Menge von im allgemeinen 0,1 bis 1,0, vorzugsweise 0,1 bis 0,6 Mol pro Mol eingesetztes Epichlorhydrin enthalten ist, und mit einem wasserlöslichen, organischen Mono- oder Polyamin mit tertiären, sekundären und ggf. primären Aminogruppen oder Ammoniak oder Gemischen hieraus bei einer Konzentration der Reaktionsteilnehmer von 10 bis 50, vorzugsweise 15 bis 30 % und einer Temperatur zwischen 25 und 95 °C, vorzugsweise 40 bis 75 °C solange um, bis die Viskosität einer 12,5%igen Lösung (bestimmt bei 25 °C) 10 - 200 mPa.s, vorzugsweise 15 bis 80 mPa.s beträgt. Der pH-Wert in diesem zweiten Reaktionsschritt liegt bei größer als 8, vorzugsweise zwischen 9 und 12. Danach gibt man der Mischung zur Beendigung der Einwirkung und zur Stabilisierung der an sich selbstvernetzenden Reaktionsprodukte zweckmäßig so viel Säure oder Säurederivate zu, daß der pH-Wert der wäßrigen Lösung bei 1 bis 7, vorzugsweise zwischen 1,5 und 5 liegt, und stellt den Feststoffgehalt der Reaktionslösung durch Verdünnen mit Wasser auf 8 bis 25 Gew.-% ein.

Die Zugabe des Mono- oder Polyamins kann unmittelbar nach Zugabe der anorganischen Base bis kurz vor Erreichen der gewünschten Viskosität bzw. kurz vor der Säurezugabe erfolgen. Besonders bevorzugt ist die Zugabe des Mono- oder Polyamins in der Mitte dieses Reaktionszeitraumes.

Als halogenfreie Säuren kommen vor allem Schwefel-, Phosphor- oder Essigsäure in Betracht, deren Anhydride oder auch saure Salze dieser Säuren.

Die erfindungsgemäßen Harzlösungen - wobei der Begriff Lösung auch kolloidale Lösungen mit einschließt - haben eine ausgezeichnete Lagerstabilität, das heißt, daß während einer Lagerung von mindestens drei Monaten bei Raumtemperatur oder mindestens 10 Tage bei 50 °C keine merkliche Gelierung oder Ausfällung auftritt.

Durch die zusätzliche Umsetzung mit den wasserlöslichen organischen Mono- oder Polyaminen weisen die erfindungsmäßigen Harze bzw. Harzlösungen gegenüber den bisher bekannten Reaktionsprodukten aus Polyamidoamin und Epichlorhydrin einen erheblich geringeren organisch gebundenen Chlorgehalt auf und eignen sich deshalb in hervorragender Weise dazu, den organischen Chlorgehalt von Abwässern, u. a. von Papierfabriken, erheblich zu senken. Diese wertvolle Eigenschaft besitzen die Reaktionsprodukte, die bisher zur Verbesserung der Naßfestwirksamkeit von Papier verwendet worden sind, nicht in gleichem Umfang. Aufgrund der hohen Lagerstabilität der erfindungsgemäßen Harzlösungen bleibt deren Naßfestwirksamkeit auch nach monatelanger Lagerung konstant.

Mit Hilfe der nach dem erfindungsgemäßen Verfahren hergestellten Reaktionsprodukte gelingt es, die Naßfestigkeit von Papier - auch von Papier aus ungebleichtem Zellstoff - hervorragend zu verbessern. In manchen Fällen ist es - je nach Art des Papiers bzw. nach Wunsch - auch möglich, die Saugfähigkeit zu erhöhen.

Bemerkenswert ist, daß die Reaktionsprodukte den Weißgrad von Papier, das aus gebleichtem Zellstoff hergestellt ist, praktisch nicht beeinträchtigen. Erwähnt sei ferner, daß die Geschwindigkeit, mit der die erfindungsgemäß zu verwendenden Reaktionsprodukte auf dem Papier bzw. im Zellstoff vernetzen, hoch ist und daß die Reaktionsprodukte auch als Retentionshilfsmittel für bei der Papierherstellung verwendete Füllstoffe, Drainagehilfsstoffe zur Verbesserung der Papierherstellungsgeschwindigkeit und Flockungsmittel zur Entfernung feiner Teilchen aus Schmutzwasser, zum Beispiel industriellem Abwasser, verwendet werden können.

Um die Naßfestigkeit von Papier gemäß der vorliegenden Erfindung zu erhöhen, kann man beispielsweise so vorgehen, daß man die in Betracht kommenden Harze in Form wäßriger Lösungen bereits der wäßrigen Suspension des Papierrohstoffes vor der Verarbeitung zu Papier zusetzt. Die Mengen an Harz, die zur Erzielung der gewünschten Naßfestigkeit erforderlich sind, lassen sich durch Vorversuche ohne Schwierigkeiten ermitteln. Im allgemeinen empfiehlt es sich, 0,05 bis 2, vorzugsweise 0,1 bis 1,6 Gew.-Teile Festharz auf 100 Gew.-Teile Papierrohstoff einzusetzen, zweckmäßig in Form einer wäßrigen Lösung, deren Gehalt an Reaktionsprodukten 8 bis 25, vorzugsweise 10 bis 15 Gew.-% beträgt.

Die folgenden Beispiele sollen die Erfindung näher veranschaulichen. Sofern nicht anders angegeben, bedeutet Prozent Gewichtsprozente. Der organische Chlorgehalt wurde aus der Differenz des nach der Verbrennungsmethode von Wickbold (Bezugsvorschriften: DIN 53 188, Abs. 13 und DIN 53 474, Abs. 5.5; 6.3) ermittelten Chlorgehaltes und dem ionischen Chlorgehalt bestimmt.

### Herstellung der Polyamidoamine (B)

### Beispiel 1

392 g Diethylentriamin (3,8 Mol) und 24,4 g (0,4 Mol) 2-Amino-ethanol wurden in einen Vierhalskolben, der mit Rührer, Thermometer und Destillationsapparatur versehen war, gefüllt und innerhalb von 30 min 584 g Adipinsäure (4 Mol) portionsweise zugegeben, so daß die Temperatur nicht über 100 °C stieg. Dann wurde unter Stickstoff in 3 Stunden auf 150 °C geheizt, eine Stunde bei dieser Temperatur gehalten und weiter auf 170 °C erwärmt, wobei das gebildete Wasser gleichmäßig herausdestillierte. Nach einer Haltezeit von etwa 2 Stunden hatte das Reaktionsprodukt eine Säurezahl von 20 mgKOH/g und eine Aminzahl von 251 mgKOH/g. Nach Entfernen der Heizung wurde das Polyamidoamin mit 570 g Wasser verdünnt. Die Lösung hatte einen Festkörpergehalt von 59,8 % (1 g, 1 Stunde 125 °C) und eine Viskosität bei 25 °C von 1174 mPa.s.

### Beispiel 2

546 g Diethylentriamin (5,29 Mol), 147 g Ethylendiamin (2,45 Mol) und 50 g 2-Aminoethanol (0,82 Mol) wurden in einen Vierhalskolben, der mit Rührer, Thermometer und Destillationsapparatur versehen war, gefüllt und innerhalb von 2 Stunden 1190 g Adipinsäure (8,15 Mol) portionsweise zugegeben, so daß die Temperatur nicht über 100 °C stieg. Danach wurden 461 g Caprolactam (4,07 Mol) innerhalb von 15 min zugesetzt, unter Stickstoff in 3 Stunden auf 150 °C geheizt, eine Stunde bei dieser Temperatur gehalten und weiter auf 170 °C erwärmt, wobei das gebildete Wasser gleichmäßig herausdestillierte. Nach einer Haltezeit von 2,5 Stunden hatte das Reaktionsprodukt eine Säurezahl von 26 mgKOH/g und eine Aminzahl von 161 mgKOH/g. Nach Enfernen der Heizung wurde das Polyamidoamin mit 1400 g Wasser verdünnt. Die Lösung hatte einen Festkörpergehalt von 61,7 % (1 g, 1 Stunde 125 °C) und eine Viskosität von 869 mPa.s.

### Beispiel 3

700 g Diethylentriamin (6,78 Mol), 188 g Ethylendiamin (3,13 Mol) und 64 g 2-Aminoethanol (1,05 Mol) wurden in einen Vierhalskolben, der mit Rührer, Thermometer und Destillationsapparatur versehen war, gefüllt und innerhalb von einer Stunde 1524 g Adipinsäure (10,43 Mol) portionsweise zugegeben, so daß die Temperatur nicht über 100 °C stieg. Dann wurde unter Stickstoff in 3 Stunden auf 150 °C geheizt, eine Stunde bei dieser Temperatur gehalten und weiter auf 170 °C erwärmt, wobei das gebildete Wasser gleichmäßig herausdestillierte. Nach einer Haltezeit von 2 Stunden hatte das Reaktionsprodukt eine Säurezahl von 23 mgKOH/g und eine Aminzahl von 204 mgKOH/g. Nach Entfernen der Heizung wurde das Polyamidoamin mit 1400 g Wasser verdünnt. Die Lösung hatte einen Festkörpergehalt von 61,3 % (1 g, 1 Stunde 125 °C) und eine Viskosität bei 25 °C von 874 mPa.s.

### Beispiel 4

Das Polyamidoamin wurde analog Beispiel 3 hergestellt.

Die Verdünnung mit Wasser erfolgte auf einen Festkörpergehalt (FK) von 29,9 % (1 g, 1 Stunde 125 °C).

Die Harzlösung hatte eine Säurezahl von 26 mgKOH/g (auf FK), eine Aminzahl von 201 mgKOH/g (auf FK) und eine Viskosität bei 25 °C von 24 mPa.s.

### Herstellung der Polyamidoamin-Epichlorhydrin-Harze (Vergleichsbeispiele ohne zusätzliche Behandlung mit einem Amin)

### Beispiel 5 (entspricht Beispiel 6 der EP-0 349 935)

a) 207 g der Polyamidoamin-Vorproduktlösung aus Beispiel 1 (entsprechend 0,552 Val NH) und 207 g Wasser wurden in einen Dreihalskolben mit Rührer, Thermometer und Kühler gegeben und unter Rühren 66,5 g Epichlorhydrin (0,72 Mol) zugesetzt. In 45 min wurde auf 60 °C erwärmt und bei dieser Temperatur gehalten. Nach 3,5 Stunden hatte die Gardner-Viskosität N erreicht.
b) Es wurden 578 g 1%ige Natronlauge zugegeben, auf 65 °C erwärmt und bei dieser Temperatur gehalten. Nach 3 Stunden lag die Gardner-Viskosität bei E-F. Dann wurden 442 g Wasser, in denen 1,5 g Kaliumsorbat gelöst waren, zugegeben, gekühlt und anschließend mit 11,7 g 48%iger Schwefelsäure auf pH 3,9 eingestellt. Die Harzlösung hatte einen Festkörpergehalt von 12,7 % (1 g, 1 Stunde 100 °C) und eine Viskosität bei 25 °C von 39 mPa.s.

### Beispiel 6 (entspricht Beispiel 8 der EP-0 349 935)

Die Arbeitsweise erfolgte analog Beispiel 5, aber mit veränderter Menge Natriumhydroxid.

Im Reaktionsschritt b) wurden 578 g 2%ige Natronlauge und 416 g Wasser, in denen 1,5 g Kaliumsorbat gelöst waren, zugegeben.

Das Ansäuern erfolgte mit 37,5 g 48%iger Schwefelsäure auf pH 1,75. Die erhaltene Harzlösung hatte einen Festkörpergehalt von 13,5 % (1 g, 1 Stunde 100 °C) und eine Viskosität bei 25 °C von 40 mPa.s.

### Beispiel 7

a) 250 g Polyamidoamin-Vorproduktlösung aus Beispiel 2 (entsprechend 0,389 Val NH) und 264 g Wasser wurden in einen Dreihalskolben mit Rührer, Thermometer und Kühler gegeben und unter Rühren 36 g Epichlorhydrin (0,389 Mol) zugesetzt. In einer Stunde wurde auf 60 °C erwärmt und bei dieser Temperatur gehalten. Nach 4 Stunden betrug die Gardner-Viskosität N-O. Es wurden 507 g Natronlauge (enthaltend 6,35 g Natriumhydroxid) zugegeben, auf 40 °C erwärmt und bei dieser Temperatur gehalten. Nach 1,5 Stunden lag die Gardner-Viskosität bei E-F. Dann wurden 442 g Wasser, in denen 1,5 g Kaliumsorbat gelöst waren, zugegeben und gekühlt.
b) 733 g des Reaktionsproduktes a) wurden sofort mit 10,7 g 48%iger Schwefelsäure auf pH 4,0 eingestellt. Die Harzlösung hatte einen Festkörpergehalt von 13,0 % (1 g, 1 Stunde 100 °C) und eine Viskosität bei 25 °C von 45 mPa.s.

### Beispiel 8

733 g des Reaktionsproduktes a) aus Beispiel 7 wurden sofort mit 15,4 g 48%iger Schwefelsäure auf pH 1,9 eingestellt. Die Harzlösung hatte einen Festkörpergehalt von 13,2 % (1 g, 1 Stunde 100 °C) und eine Viskosität bei 25 °C von 35 mPa.s.

### Beispiel 9

459 g Polyamidoamin-Vorproduktlösung aus Beispiel 4 (entsprechend 0,443 Val NH) und 14 g Wasser wurden in einen Dreihalskolben mit Rührer, Thermometer und Kühler gegeben und unter Rühren 53 g Epichlorhydrin (0,573 Mol) zugesetzt. In einer Stunde wurde auf 63 °C erwärmt und bei dieser Temperatur gehalten. Nach 3 Stunden betrug die Gardner-Viskosität F. Es wurden 532 g Natronlauge (enthaltend 8,2 g Natriumhydroxid) zugegeben, auf 60 °C erwärmt und bei dieser Temperatur gehalten. Nach 3 Stunden lag die Gardner-Viskosität bei E-F. Dann wurden 442 g Wasser, in denen 1,5 g Kaliumsorbat gelöst waren, zugegeben und gekühlt.

Danach wurde das Reaktionsprodukt sofort mit 17,7 g 48%iger Schwefelsäure auf pH 4,0 eingestellt. Die Harzlösung hatte einen Festkörpergehalt von 13,1 % (1 g, 1 Stunde 100 °C) und eine Viskosität bei 25 °C von 38 mPa.s.

### Beispiel 10

a) 211 g der Polyamidoamin-Vorproduktlösung aus Beispiel 3) entsprechend 0,419 Val NH) und 221 g Wasser wurden in einen Dreihalskolben mit Rührer, Thermometer und Kühler gegeben und unter Rühren 50 g Epichlorhydrin (0,541 Mol) zugesetzt. In einer Stunde wurde auf 63 °C erwärmt und bei dieser Temperatur gehalten. Nach 3 Stunden hatte die Gardner-Viskosität F-G erreicht.
   Es wurden 517 g Natronlauge (enthaltend 15,5 g Natriumhydroxid) zugegeben, auf 50 °C erwärmt und bei dieser Temperatur gehalten. Nach 2 Stunden lag die Gardner-Viskosität bei T. Dann wurden 501 g Wasser, in denen 1,5 g Kaliumsorbat gelöst waren, zugegeben und gekühlt.
b) 727 g des Reaktionsproduktes a) wurden sofort mit 14,6 g 48%iger Schwefelsäure auf pH 4,0 eingestellt. Die Harzlösung hatte einen Festkörpergehalt von 13,2 % (1 g, 1 Stunde 100 °C) und eine Viskosität bei 25 °C von 202 mPa.s.

### Herstellung von Polyamidoamin-Epichlorhydrin-Harzen (erfindungsgemäß)

### Beispiel 11

459 g Polyamidoamin-Vorproduktlösung aus Beispiel 4 (entsprechend 0,443 Val NH) und 14 g Wasser wurden in einem Dreihalskolben mit Rührer, Thermometer und Kühler gegeben und unter Rühren 53 g Epichlorhydrin (0,573 Mol) zugesetzt. In einer Stunde wurde auf 62 °C erwärmt und eine Stunde gehalten, danach noch eine weitere Stunde bei 65 °C bis die Gardner-Viskosität bei F lag. Es wurden 532 g Natronlauge (enthaltend 8,2 g Natriumhydroxid) zugegeben, innerhalb einer Stunde auf 55 °C erwärmt, 40 min bei dieser Temperatur gehalten und innerhalb von 3 Stunden kontinuierlich auf 80 °C geheizt bis die Gardner-Viskosität D-E erreicht hatte.

Dann wurden 16,7 g 45%ige Trimethylaminlösung zugegeben und der Ansatz weiter bei 80 °C in 30 min auf eine Gardner-Viskosität von E-F gebracht. Das Reaktionsprodukt wurde nun mit 442 g Wasser, in dem 1,5 g Kaliumsorbat gelöst waren, verdünnt, gekühlt und mit 18,7 g 48%iger Schwefelsäure auf pH 4,0 eingestellt. Die Harzlösung hatte einen Festkörpergehalt von 13,3 % (1 g, 1 Stunde 100 °C) und eine Viskosität bei 25 °C von 41 mPa.s.

### Beispiel 12

Der Ansatz nach Beipiel 11 wurde mit extrem kurzer Laufzeit wiederholt.

Nach einer Laufzeit von ca. einer Stunde bei 75 °C erfolgte bei einer Gardner-Viskosität von G die Zugabe der Natronlauge. Nach einer weiteren Stunde bei 75 °C Gardner-Viskosität von B-C wurde die Trimethylaminlösung und nach insgesamt 3 Stunden Laufzeit bei 75 °C bei einer Gardner-Viskosität von G-H das Verdünnungswasser und die Schwefelsäure zugegeben. Die Harzlösung hatte einen pH-Wert von 4,0, einen Festkörpergehalt von 13,4 % (1 g, 1 Stunde 100 °C) und eine Viskosität bei 25 °C von 48 mPa.s.

### Beispiel 13

547 g Polyamidoamin-Vorproduktlösung aus Beispiel 4 (entsprechend 0,528 Val NH) und 23 g Wasser wurden in einem Dreihalskolben mit Rührer, Thermometer und Kühler gegeben und unter Rühren 63 g Epichlorhydrin (0,681 Mol) zugesetzt. In einer Stunde wurde auf 60 °C, in einer weiteren Stunde auf 64 °C erwärmt und ein Stunde bei dieser Temperatur gehalten bis Gardner-Viskosität F und 627 g Natronlauge (enthaltend 9,7 g Natriumhydroxid) zugegeben. Nach 2,5 Stunden Haltezeit bei 73 °C wurden 19,7 g 45%ige Trimethylaminlösung zugesetzt und weiter eine Stunde bei 78 °C bis zu einer Gardner-Viskosität von D erwärmt. Das Reaktionsprodukt wurde nun mit 240 g Wasser, in dem 1,5 g Kaliumsorbat gelöst waren, verdünnt, gekühlt und mit 24,1 g 48%iger Schwefelsäure auf pH 4,0 eingestellt. Die Harzlösung hatte einen Festkörpergehalt von 16,2 % (1 g, 1 Stunde 100 °C) und eine Viskosität bei 25 °C von 41 mPa.s.

### Beispiel 14

459 g Polyamidoamin-Vorproduktlösung aus Beispiel 4 (entsprechend 0,443 Val NH) und 14 g Wasser wurden in einem Dreihalskolben mit Rührer, Thermometer und Kühler gegeben und unter Rühren 53 g Epichlorhydrin (0,573 Mol) zugesetzt.

In einer Stunde wurde auf 62 °C erwärmt und 2 Stunden gehalten bis die Gardner-Viskosität bei E-F lag. Es wurden 532 g Natronlauge (enthaltend 8,2 g Natriumhydroxid) zugegeben, innerhalb einer Stunde auf 65 °C erwärmt und weitere 2 Stunden von 65 °C auf 75 °C kontinuierlich steigend geheizt bis die Gardner-Viskosität B bis C erreicht hatte. Dann wurden 15,3 g N-Methyl-diethanolamin zugegeben und der Ansatz weiter bei 80 °C in 1,5 Stunden auf eine Gardner-Viskosität von E-F gebracht. Das Reaktionsprodukt wurde nun mit 442 g Wasser, in dem 1,5 g Kaliumsorbat gelöst waren, verdünnt, gekühlt und mit 21,5 g 48%iger Schwefelsäure auf pH 4,0 eingestellt. Die Harzlösung hatte einen Festkörpergehalt von 14,5 % (1 g, 1 Stunde 100 °C) und eine Viskosität bei 25 °C von 36 mPa.s.

### Beispiel 15

Das Harz wurde analog Beispiel 14 hergestellt, anstatt N-Methyl-diethanolamin wurden 14,8 g Diethylethanolamin eingesetzt.

Die Reaktionslösung wurde am Ende mit 22 g 48%iger Schwefelsäure auf pH 4,0 eingestellt.

Die Harzlösung hatte einen Festkörpergehalt von 14,3 % (1 g, 1 Stunde 100 °C) und eine Viskosität bei 25 °C von 26 mPa.s.

### Beispiel 16

223 g Polyamidoamin-Vorproduktlösung aus Beispiel 3 (entsprechend 0,443 Val NH) und 250 g Wasser wurden in einem Dreihalskolben mit Rührer, Thermometer und Kühler gegeben und unter Rühren 53 g Epichlorhydrin (0,573 Mol) zugesetzt. In einer Stunde wurde auf 60 °C erwärmt und danach die Temperatur innerhalb von 2,5 Stunden auf 65 °C gesteigert bis die Gardner-Viskosität bei E-F lag.

Es wurden 532 g Natronlauge (enthaltend 8,2 g Natriumhydroxid) zugegeben, innerhalb einer Stunde auf 55 °C erwärmt und weitere 2 Stunden von 55 °C auf 80 °C kontinuierlich steigend geheizt bis die Gardner-Viskosität C erreicht hatte. Dann wurden 11,2 g N,N-Dimethylisopropylamin zugegeben und der Ansatz weiter bei 80 °C in 1,5 Stunden auf eine Gardner-Viskosität von C gebracht.

Das Reaktionsprodukt wurde nun mit 442 g Wasser, in dem 1,5 g Kaliumsorbat gelöst waren, verdünnt, gekühlt und mit 21,2 g 48%iger Schwefelsäure auf pH 4,0 eingestellt. Die Harzlösung hatte einen Festkörpergehalt von 13,8 % (1 g, 1 Stunde 100 °C) und eine Viskosität bei 25 °C von 24 mPa.s.

### Beispiel 17

Das Harz wurde analog Beispiel 16 hergestellt, anstatt N,N-Dimethylisopropylamin wurden 13,0 g Diisopropylamin eingesetzt.

Die Reaktionslösung wurde am Ende mit 22,4 g 48%iger Schwefelsäure auf pH 4,0 eingestellt.

Die Harzlösung hatte einen Festkörpergehalt von 14,0 % (1 g, 1 Stunde bei 100 °C) und eine Viskosität von 17 mPa.s.

### Papierbehandlung

Zu einer 2 %igen Suspension von gebleichtem Sulfitzellstoff mit einem Mahlgrad von 42 bis 43 °C Schopper-Riegler wurde unter starkem Rühren die wäßrigen Harzlösungen von Beispiel 5 bis 17 in einer Menge von 1 % Festharz auf Zellstoff gegeben.

Nach einer Aufziehzeit von mindestens 2 Minuten wurden in einem Blattbildner nach Schopper zwei Papierblätter von ca. 320 cm² Fläche mit einem Flächengewicht von 100 g/m² gebildet, auf einem dampfbeheizten Zylinder 5 Minuten bei 100 °C getrocknet und 10 Minuten bei 120 °C im Trockenschrank nachgehärtet. Nach einer Klimatisierungszeit von 24 Stunden bei 20 °C und 65 % relativer Luftfeuchtigkeit wurden von Probestreifen des Papiers die Naßfestigkeit in Newton (N) nach dem Merkblatt V/12/57 des Vereins ZELL-CHEMING gemessen. Das auf diese Weise erhaltene Papier wies eine Naßfestigkeit auf, die erheblich höher lag als die eines Papiers, das aus dem gleichen gebleichten Sulfitzellstoff ohne Zusatz der wäßrigen Lösungen der erfindungsgemäß verwendeten Produkte unter gleichen Versuchsbedingungen hergestellt wurde.

Die Naßfestigkeiten in Newton (N) sind in Relativ-%, bezogen auf Vergleichsprodukt 9 = 100 %, in Tabelle 1 angegeben.

Bei den Beispielen 5 bis 10 handelt es sich um Vergleiche zum Stand der Technik (EP-0 349 935).

Wie die Vergleichsbeispiele zeigen, erhält man eine hohe Lagerstabilität bei einem erwünschten pH-Wert von ca. 4 nur dann, wenn auch der Gehalt an organisch gebundenem Chlor relativ hoch ist (Beispiele 5 und 9). Eine hohe Lagerstabilität und eine gleichzeitige Absetzung des Chlorgehalts ist jedoch nur durch eine unerwünschte starke Absenkung des pH-Werts möglich (Beispiele 6 und 8). Eine noch weitere Reduzierung des Chlorgehalts bei einem relativ hohen pH-Wert ist zwar möglich, führt aber zum Verlust der Lagerstabilität (Beispiele 7 und 10). Die Beispiele 11 bis 17 zeigen dagegen, daß man durch die Behandlung der Harze mit einem organischen Amin alle drei Parameter gleichzeitig auf optimale Werte einstellen kann.

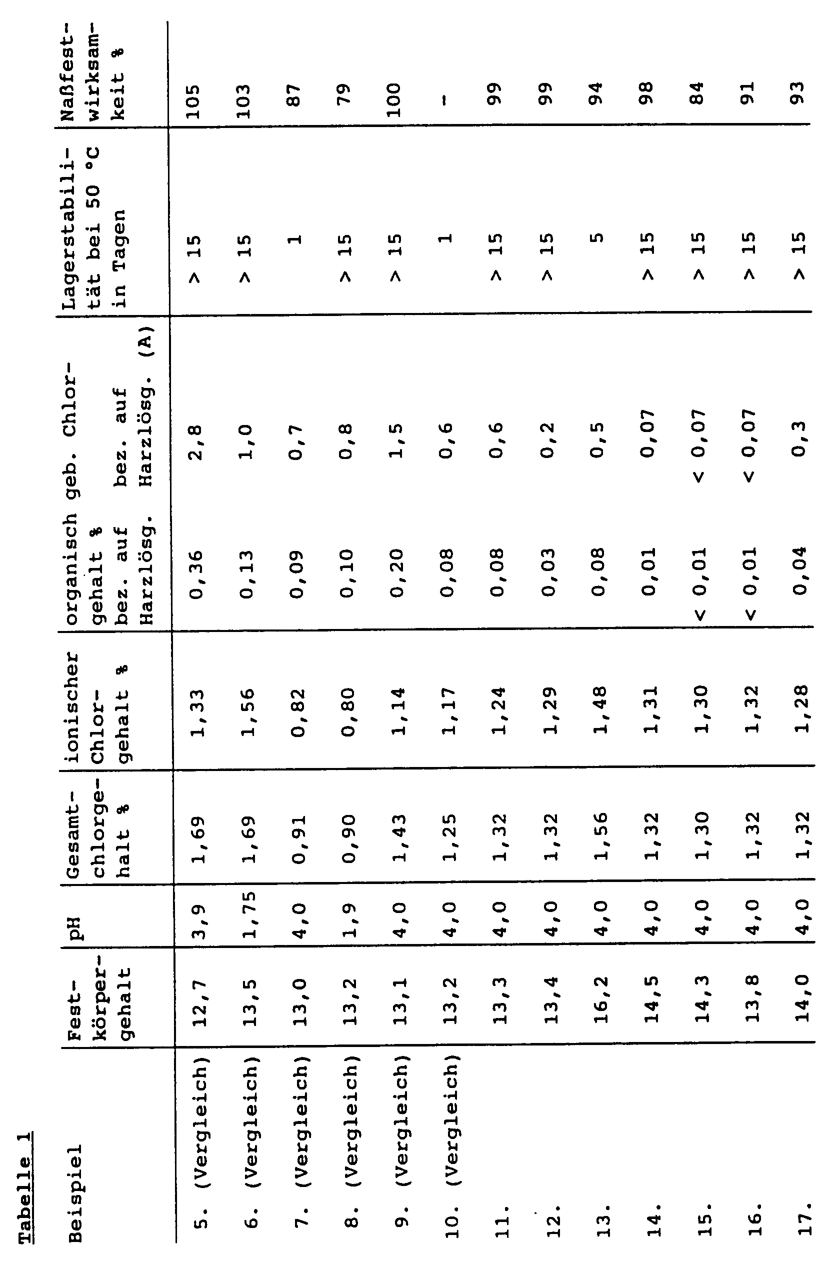

## Patentansprüche

1. Wäßrige Harzlösung, enthaltend als Harz ein wasserverdünnbares Polyamidoamin-Epichlorhydrin-Harz (A) mit einem Gehalt an organisch gebundenem Chlor von weniger als 0,8 %, erhältlich durch
a) Umsetzung eines wasserverdünnbaren, basischen Polyamidoamins (B), mit Epichlorhydrin,
b) Reaktion des so erhaltenen Harzes mit einer anorganischen Base und anschließend mit
c) einem wasserlöslichen organischen Mono- oder Polyamin oder mit Ammoniak oder deren Gemischen und anschließender
d) Zugabe einer Säure, daß ein pH-Wert von 1 bis 7 erreicht wird.

2. Wäßrige Harzlösung nach Anspruch 1, dadurch gekennzeichnet, daß die Zugabe des Mono- oder Polyamins oder des Ammoniaks oder deren Gemische unmittelbar nach Zugabe der anorganischen Base bis kurz vor der Säurezugabe erfolgt.

3. Harzlösung nach Anspruch 1, dadurch gekennzeichnet, daß der Massenanteil an organisch gebundenem Chlor in dem Harz (A) 0,001 bis 2,5 % beträgt.

4. Harzlösung nach mindestens einem der Ansprüche 1 bis 3, dadurch gekennzeichnet, daß der Massenanteil an Harz (A) in der Lösung zwischen 8 und 25 % liegt.

5. Harzlösung nach mindestens einem der Ansprüche 1 bis 4, dadurch gekennzeichnet, daß die Menge an anorganischer Base 0,1 bis 1,0 mol pro 1 - mol eingesetztes Epichlorhydrin beträgt.

6. Harzlösung nach Anspruch 5, dadurch gekennzeichnet, daß als Base Natrium- oder Kaliumhydroxid eingesetzt wird.

7. Harzlösung nach mindestens einem der Ansprüche 1 bis 6, dadurch gekennzeichnet, daß das Polyamidoamin-Epichlorhydrin Harz mit einem Mono- oder Polyamin oder mit Ammoniak oder Gemischen hieraus in solchen Mengen umgesetzt wird, daß pro 1 mol Epichlorhydrin 0,01 bis 2 mol basische Aminogruppen vorhanden sind.

8. Harzlösung nach mindestens einem der Ansprüche 1 bis 7, dadurch gekennzeichnet, daß als Monoamine Verbindungen der Formel
NR₁R₂R₃
eingesetzt werden, worin
R₁, R₂ und R₃ unabhängig voneinander Wasserstoff oder einen aliphatischen, cycloaliphatischen oder araliphatischen Alkyl- oder Hydroxyalkylrest mit 1 bis 20 C-Atomen bedeuten, der durch Heteroatome wie Sauerstoff und Schwefel unterbrochen sein kann, und die Polyamine aus den folgenden Verbindungen ausgewählt sind:
1,4-Diazabicyclo(2.2.2)octan, N,N,N',N'-Tetramethyläthandiamin, N,N,N',N'-Tetramethyl-1,3-propandiamin, N,N,N',N'-Tetramethyl-1,6-hexandiamin, N,N,N',N'-Tetramethyldiaminodiäthyläther, N,N,N',N'-Pentamethyldiäthylentriamin, Äthylendiamin, N,N'-Dimethyl-1,2-äthandiamin, N-Methyl-1,2-äthandiamin, N-Äthyl-1,2-äthandiamin, N,N-Diäthyl-1,2-äthandiamin, N-(2-Hydroxyäthyl)1,2-äthandiamin, 1,2-Diaminopropan, 1,3-Diaminopropan, 2-Hydroxy-1,3-diaminopropan, 3-Amino-1-methylaminopropan, N,N-Dimethyl-1,3-propandiamin, N,N'-Dimethyl-1,3-propandiamin, N,N-Diäthyl-1,3-propandiamin, N-Cyclohexyl-1,3-propandiamin, 2,2-Dimethyl-1,3-propandiamin, 1,3-Diaminobutan, 1,4-Diaminobutan, 1,3-Bis-(2-hydroxyäthylamino)propan, 1,4-Bis-methylaminobutan, N,N-Diäthyl-1,4-pentandiamin, 2-Methyl-1,5-pentandiamin, 1,5-Pentandiamin, 1,6-Diaminohexan, 2,2,4- und 2,4,4-Trimethyl-1,6-hexandiamin, 1,2-, 1,3- und 1,4-Diaminocyclohexan, Menthandiamin, Piperazin, 3,5,5-Trimethyl-3-aminomethyl-cyclohexylamin, (Isophorondiamin), 4,4'-Methylen-bis-cyclohexylamin, 4,4'-Methylen-bis-(2-methyl-cyclohexylamin), Bis-(2-aminoäthyl)-äther, 2,2'-Bis-methylaminodiäthyl-äther, Bis-(3-aminopropyl)-äther, Bis-(3-aminopropyl)-sulfid, 4,9-Dioxadodecan-1,12-diamin, 4,7,10-Trioxatridecan-1,13-diamin, 1,3-Bis-aminomethylbenzol (m-Xylylendiamin), TCD-Diamin (Bis(amino-methyl)-tricyclodecan), Diäthylentriamin, Dipropylentriamin, Tetraäthylenpentamin, Pentaäthylenhexamin, Tripropylentetramin, höhere Polyalkylenpolyamine, Methyl-bis-(3-aminopropyl)-amin, Dihexamethylentriamin, Aminoäthylpiperazin, 3-(2-Aminoäthyl)amino-propylamin, N,N'-Bis-(3-aminopropyl)äthylendiamin, Äthyl-bis-(3-aminopropyl)-amin, 2-Hydroxyäthyl-bis-(3-aminopropyl)-amin, N-(3-Aminopropyl)-tetramethylendiamin, N,N'-Bis-(3-aminopropyl)-tetramethylendiamin, 1,3-Bis-(2-aminoäthylamino)-propan, 3-(3-Diäthylamino-propylamino)-propylamin, 2,2'-Bis-(2-amino-äthylamino)-diäthyläther, 1,6-Bis-(2-aminoäthylamino)-hexan, 1,6-Bis-(3-amino-propylamino)-hexan, Bis-(6-amino-n-hexyl)amin, Polyalkylenpolyamine, Polyäthylenimine oder Gemische hieraus, sowie die Polyamidoamine herstellbar durch Umsetzung von
a- gesättigten aliphatischen C₃-C₁₀-Dicarbonsäuren mit Gemischen von aliphatischen Polyaminen, die mindestens zwei primäre und mindestens eine weitere, und zwar sekundäre und/oder tertiäre Aminogruppe enthalten, mit Alkanolmonoaminen,
b- solchen gesättigten modifizierten Dicarbonsäuren bzw. deren Derivaten, die durch Anlagerung von aliphatischen, cycloaliphatischen, araliphatischen oder heterocyclischen Polyaminen erhalten werden, die mindestens zwei Aminogruppen und zwar primäre und/oder sekundäre enthalten, an α,β-olefinisch-ungesättigte Carbonsäureester, deren Alkoholrest 1 bis 8 C-Atome hat, mit Polyaminen ausgewählt aus aliphatischen Polyaminen, die mindestens zwei primäre und mindestens eine weitere, und zwar sekundäre und/oder tertiäre Aminogruppe enthalten, und Polyaminen, die mindestens eine primäre und gegebenenfalls mindestens eine sekundäre Aminogruppe enthalten bzw. deren Gemischen, gegebenenfalls in Abmischung mit Alkanolmonoaminen,
c- mindestens drei Kohlenstoffatomen enthaltenden ω-Aminocarbonsäuren oder deren Lactamen mit Gemischen von aliphatischen Polyaminen, die mindestens zwei primäre und mindestens eine weitere, und zwar sekundäre und/oder tertiäre Aminogruppe enthalten, mit Alkanolmonoaminen,
d- olefinisch ungesättigten Dicarbonsäuren bzw. deren funktionellen Derivaten, wie Anhydriden oder Estern, mit Polyaminen ausgewählt aus aliphatischen Polyaminen, die mindestens zwei primäre und mindestens eine weitere, und zwar sekundäre und/oder tertiäre Aminogruppe enthalten, und Polyaminen, die mindestens eine primäre und gegebenenfalls mindestens eine sekundäre Aminogruppe enthalten bzw. deren Gemischen, gegebenenfalls in Abmischung mit Alkanolmonoaminen, oder
e- Mischungen von gesättigten aliphatischen C₃-C₁₀-Dicarbonsäuren, olefinisch ungesättigten Dicarbonsäuren bzw. deren funktionellen Derivaten, wie Anhydriden oder Estern, und mindestens drei Kohlenstoffatomen enthaltenden ω-Aminocarbonsäuren oder deren Lactamen mit aliphatischen Polyaminen, die mindestens zwei primäre und mindestens eine weitere, und zwar sekundäre und/oder tertiäre Aminogruppe enthalten, und aliphatischen, cycloaliphatischen, araliphatischen oder heterocyclischen Polyaminen und Alkanolaminen mit noch mindestens einer primären und gegebenenfalls sekundären Aminogruppe.

9. Verwendung der wäßrigen Harzlösung nach mindestens einem der Ansprüche 1 bis 8 als Hilfsmittel in der Papierindustrie, insbesondere zur Erhöhung der Naßfestigkeit von Papier.

## Claims

1. An aqueous resin solution containing, as the resin, a water-dilutable polyamidoamine-epichlorohydrin resin (A) containing less than 0.8% of organically bonded chlorine, obtainable by
a) reacting a water-dilutable, basic polyamidoamine (B) with epichlorohydrin,
b) reacting the resin thus obtained with an inorganic base and then with
c) a water-soluble organic mono- or polyamine or with ammonia or with mixtures thereof and then
d) adding an acid so that a pH of from 1 to 7 is reached.

2. The aqueous resin solution as claimed in claim 1, wherein the addition of the mono- or polyamine or of the ammonia or of the mixtures thereof is effected immediately after the addition of the inorganic base until shortly before the addition of the acid.

3. The resin solution as claimed in claim 1, wherein the mass fraction of organically bonded chlorine in the resin (A) is from 0.001 to 2.5%.

4. The resin solution as claimed in at least one of claims 1 to 3, wherein the mass fraction of resin (A) in the solution is from 8 to 25%.

5. The resin solution as claimed in at least one of claims 1 to 4, wherein the amount of inorganic base is from 0.1 to 1.0 mol per mole of epichlorohydrin used.

6. The resin solution as claimed in claim 5, wherein the base used is sodium hydroxide or potassium hydroxide.

7. The resin solution as claimed in at least one of claims 1 to 6, wherein polyamidoamine-epichlorohydrin resin is reacted with mono- or polyamine or with ammonia or mixtures thereof in amounts such that from 0.01 to 2 mol of basic amino groups are present per mole of epichlorohydrin.

8. The resin solution as claimed in at least one of claims 1 to 7, wherein the monoamines used are compounds of the formula
NR₁R₂R₃
in which R₁, R₂ and R₃, independently of one another, are hydrogen or an aliphatic, cycloaliphatic or araliphatic alkyl or hydroxyalkyl radical having 1 to 20 carbon atoms which may be interrupted by hetero atoms, such as oxygen and sulfur, and the polyamines are selected from the following compounds:
1,4-diazabicyclo[2.2.2]octane, N,N,N',N'-tetramethylethanediamine, N,N,N',N'-tetramethyl-1,3-propanediamine, N,N,N',N'-tetramethyl-1,6-hexanediamine, N,N,N',N'-tetramethyldiaminodiethyl ether, N,N,N',N',N''-pentamethyldiethylenetriamine, ethylenediamine, N,N'-dimethyl-1,2-ethanediamine, N-methyl-1,2-ethanediamine, N-ethyl-1,2-ethanediamine, N,N-diethyl-1,2-ethanediamine, N-(2-hydroxyethyl)-1,2-ethanediamine, 1,2-diaminopropane, 1,3-diaminopropane, 2-hydroxy-1,3-diaminopropane, 3-amino-1-methylaminopropane, N,N-dimethyl-1,3-propanediamine, N,N'-dimethyl-1,3-propanediamine, N,N-diethyl-1,3-propanediamine, N-cyclohexyl-1,3-propanediamine, 2,2-dimethyl-1,3-propanediamine, 1,3-diaminobutane, 1,4-diaminobutane, 1,3-bis(2-hydroxyethylamino)propane, 1,4-bismethylaminobutane, N,N-diethyl-1,4-pentanediamine, 2-methyl-1,5-pentanediamine, 1,5-pentanediamine, 1,6-diaminohexane, 2,2,4- and 2,4,4-trimethyl-1,6-hexanediamine, 1,2-, 1,3- and 1,4-diaminocyclohexane, menthanediamine, piperazine, 3,5,5-trimethyl-3-aminomethylcyclohexylamine (isophoronediamine), 4,4'-methylenebiscyclohexylamine, 4,4'-methylenebis(2-methylcyclohexylamine), bis(2-aminoethyl) ether, 2,2'-bismethylaminodiethyl ether, bis(3-aminopropyl) ether, bis(3-aminopropyl) sulfide, 4,9-dioxadodecane-1,12-diamine, 4,7,10-trioxatridecane-1,13-diamine, 1,3-bisaminomethylbenzene (m-xylylenediamine), TCD-diamine (bis(aminomethyl)tricyclodecane), diethylenetriamine, dipropylenetriamine, tetraethylenepentamine, pentaethylenehexamine, tripropylenetetramine, higher polyalkylenepolyamines, methylbis(3-aminopropyl)amine, dihexamethylenetriamine, aminoethylpiperazine, 3-(2-aminoethyl)aminopropylamine, N,N'-bis(3-aminopropyl)ethylenediamine, ethylbis(3-aminopropyl)amine, 2-hydroxyethylbis(2-aminopropyl)amine, N-(3-aminopropyl)tetramethylenediamine, N,N'-bis(3-aminopropyl)tetramethylenediamine, 1,3-bis(2-aminoethyleneamino)propane, 3-(3-diethylaminopropylamino)propylamine, 2,2'-bis(2-aminoethylamino)diethyl ether, 1,6-bis(2-aminoethylamino)hexane, 1,6-bis(3-aminopropylamino)hexane, bis(6-amino-n-hexyl)amine, polyalkyleneamines, polyethyleneimines or mixtures thereof, and the polyamidoamines can be prepared by reacting
a- saturated aliphatic C₃-C₁₀-dicarboxylic acids with mixtures of aliphatic polyamines which contain at least two primary and at least one further amino group, specifically secondary and/or tertiary amino group, with alkanolmonoamines,
b- those saturated modified dicarboxylic acids or their derivatives which are obtained by an addition reaction of aliphatic, cycloaliphatic, araliphatic or heterocyclic polyamines which contain at least two amino groups and specifically primary and/or secondary ones, with α,β-olefinically unsaturated carboxylic esters whose alcohol radical has 1 to 8 carbon atoms, with polyamines selected from aliphatic polyamines which contain at least two primary and at least one further amino group, specifically secondary and/or tertiary amino group, and polyamines which contain at least one primary and, if desired, at least one secondary amino group or mixtures thereof, if desired as a mixture with alkanol-monoamines,
c- ω-aminocarboxylic acids containing at least three carbon atoms or lactams thereof with mixtures of aliphatic polyamines which contain at least two primary and at least one further amino group, specifically secondary and/or tertiary amino group, with alkanolmonoamines,
d- olefinically unsaturated dicarboxylic acids or functional derivatives thereof, such as anhydrides or esters, with polyamines selected from aliphatic polyamines which contain at least two primary and at least one further amino group, specifically secondary and/or tertiary amino group, and polyamines which contain at least one primary and, if desired, at least one secondary amino group or mixtures thereof, if desired as a mixture with alkanolmonoamines, or
e- mixtures of saturated aliphatic C₃-C₁₀-dicarboxylic acids, olefinically unsaturated dicarboxylic acids or functional derivatives thereof, such as anhydrides or esters, and ω-aminoacarboxylic acids containing at least three carbon atoms or lactams thereof with aliphatic polyamines which contain at least two primary and at least one further amino group, specifically secondary and/or tertiary amino group, and aliphatic, cycloaliphatic, araliphatic or heterocyclic polyamines and alkanolamines also having at least one primary and, if desired, secondary amino group.

9. The use of the aqueous resin solution as claimed in at least one of claims 1 to 8 as an auxiliary in the paper industry, in particular for increasing the wet strength of paper.

## Revendications

1. Solution aqueuse de résine contenant en tant que résine une résine polyamidoamine-épichlorhydrine diluables à l'eau (A), avec une teneur en chlore à liaison organique inférieure à 0,8 %, que l'on peut obtenir par
a) réaction d'une polyamidoamine basique diluable à l'eau (B) avec l'épichlorhydrine,
b) réaction de la résine ainsi obtenue avec une base inorganique et ensuite avec
c) une mono- ou polyamine organique hydrosoluble ou avec l'ammoniac ou leurs mélanges, et ensuite
b) ajout d'un acide pour atteindre un pH de 1 à 7.

2. Solution aqueuse de résine selon la revendication 1, caractérisée en ce que ll'on ajoute la mono- ou polyamine ou l'ammoniac ou leurs mélanges après avoir ajouté la base organique jusqu'à peu de temps avant d'ajouter l'acide.

3. Solution aqueuse de résine selon la revendication 1, caractérisée en ce que le taux massique en chlore à liaison organique dans la résine (A) est de 0,001 à 2,5 %.

4. Solution aqueuse de résine selon la revendication 1 à 3, caractérisée en ce que le taux massique en résine (A) dans la solution est compris entre 8 et 25 %.

5. Solution aqueuse de résine selon l'une des revendications 1 à 4, caractérisée en ce que la quantité de la base inorganique est de 0,1 à 1,0 mode pour 1 mole d'épichlorhydrine utilisée.

6. Solution de résine selon la revendication 5, caractérisée en ce que l'on utilise en tant que base l'hydroxyde de sodium ou de potassium.

7. Solution de résine selon au moins l'une des revendications 1 à 6, caractérisée en ce que l'on fait régir la résine polyamidoamine-épichlorhydrine avec une mono- ou polyamine ou l'ammoniac ou des mélanges de ces substances dans des quantités telles que 0,02 à 2 moles de groupes amino basiques soient présents pour 1 mole d'épichlorhydrine.

8. Solution de résine au moins l'une des revendications 1 à 7, caractérisée en ce que l'on utilise en tant que monoamines des composés de formule
NR₁R₂R₃
dans laquelle
R₁, R₂ et R₃, indépendamment les uns des autres, représentent un atome d'hydrogène ou un reste alkyle ou hydroxyalkyle aliphatique, cycloaliphatique ou araliphatique, comportant de 1 à 20 atomes de carbone, qui peut être interrompu par des hétéroatomes tels que l'oxygène et le soufre, et on prend les polyamines parmi les composés suivants :
le 1,4-diazabicyclo(2.2.2)octane, la N,N,N',N'-tétraméthylènediamine, la N,N,N',N'-tétraméthyl-1,3-propanediamine, la N,N,N',N'-tétraméthyl-1,6-hexanediamine, le N,N,N',N'-tétraméthyldiaminodiéthyléther, la N,N,N',N'-pentaméthyldiéthylènetriamine, l'éthylènediamine, la N,N'-diméthyl-1,2-éthanediamine, la N-méthyl-1,2-éthanediamine, la N-éthyl-1,2-éthanediamine, la N,N-diéthyl-1,2-éthanediamine, la N-(2-hydroxyéthyl)-1,2-éthanediamine, le 1,2-diaminopropane, le 1,3-diaminopropane, le 2-hydroxy-1,3-diaminopropane, le 3-amino-1-méthylaminopropane, la N,N-diméthyl-1,3-propanediamine, la N,N'-diméthyl-1,3-propanediamine, la N,N-diéthyl-1,3-propanediamine, la N-cyclohexyl-1,3-propanediamine, la 2,2-diméthyl-1,3-propanediamine, le 1,3-diaminobutane, le 1,4-diaminobutane, le 1,3-bis-(2-hydroxyéthylamino)-propane, le 1,4-bis-méthylaminobutane, la N,N-diéthyl-1,4-pentanediamine, la 2-méthyl-1,5-pentanediamine, la 1,5-pentanediamine, le 1,6-diaminohexane, la 2,2,4- et 2,4,4-triméthyl-1,6-hexanediamine, le 1,2-, le 1,3- et le 1,4-diaminocyclohexane, la méthanediamine, la pipérazine, la 3,5,5-triméthyl-3-aminométhylcyclohexylamine (isophorone diamine), la 4,4'-méthylène-bis-cyclohexylamine, la 4,4'-méthylène-bis-(2-méthylcyclohexylamine), le bis-(2-aminoéthyl)-éther, le 2,2'-bis-méthylaminodiéthyléther, le bis-(3-aminopropyl)éther, le sulfure de bis-(3-aminopropyle), la 4,9-dioxadodécane-1,12-diamine, la 4,7,10-trioxatridécane-1,13-diamine, le 1,3-bis-aminométhylbenzène (m-xylylènediamine), la TCD-diamine (bis-(aminométhyl)tricyclodécane), la diéthylènetriamine, la dipropylènetriamine, la tétraéthylènepentamine, la pentaéthylènehexamine, la tripropylènetétramine, des polyalkylène-polyamines supérieures, la méthyl-bis-(3-aminopropyl)-amine, la dihexaméthylènetriamine, l'aminoéthylpipérazine, la 3-(2-aminoéthyl)-aminopropylamine, la N,N'-bis-(3-aminopropyl)éthylènediamine, l'éthyl-bis-(3-aminopropyl)amine, la 2-hydroxyéthyl-bis-(3-aminopropylamine), la N-(3-aminopropyl)-tétraméthylènediamine, la N,N'-bis-(3-aminopropyl)tétraméthylènediamine, le 1,3-bis-(2-aminoéthylamino)-propane, la 3-(3-diéthylaminopropylamino)propylamine, le 2,2'-bis-(3-aminoéthylamino)-diéthyléther, le 1,6-bis-(2-aminoéthylamino)-hexane, le 1,6-bis-(3-amino-propylamino)hexane, la bis-(6-amino-n-hexyl)amine, des polyalkylènepolyamines, des polyéthylénimines ou leurs mélanges, ainsi que des polyamidoamines que l'on peut préparer par réaction
a) d'acides dicarboxyliques en C₃-C₁₀ aliphatiques, saturés, avec des mélanges de polyamines aliphatiques, qui comportent au moins deux groupes amino primaires et au moins un autre groupe amino, c'est-à-dire, secondaire et/ou tertiaire, avec des alcanolmonoamines,
b) de tels acides dicarboxyliques saturés modifiés, respectivement de leurs dérivés, que l'on obtient par addition de polyamines aliphatiques, cycloaliphatiques, araliphatiques ou hétérocycliques, qui contiennent au moins deux groupes amino, c'est-à-dire primaire et/ou secondaires, sur des esters d'acides carboxyliques à insaturation oléfinique en α,β, dont le reste alcool comporte de 1 à 8 atomes de carbone, avec des polyamines pris parmi les polyamines aliphatiques, qui comportent au moins deux groupes amino primaires et au moins un autre groupe amino, c'est-à-dire, secondaire et/ou tertiaire, et des polyamines qui contiennent au moins un groupe amino primaire et éventuellement au moins un groupe amino secondaire, respectivement leurs mélanges, éventuellement en mélange avec des alcanolmonoamines,
c) des acides ω-aminocarboxyliques contenant au moins trois atomes de carbone ou de leurs lactames avec des mélanges de polyamines aliphatiques, qui contiennent au moins deux groupes amino primaires et au moins un autre groupe amino, c'est-à-dire, secondaire et/ou tertiaire, avec des alcanolmonoamines,
d) des acides dicarboxyliques à insaturation oléfinique, respectivement leurs dérivés fonctionnels, comme des anhydrides ou esters, avec des polyamines prises parmi les polyamines aliphatiques, qui contiennent au moins deux groupes amino primaires et au moins un autre groupe amino, c'est-à-dire, secondaire et/ou tertiaire, et des polyamines qui contiennent au moins un groupe amino primaire et éventuellement au moins un groupe amino secondaire, respectivement leurs mélanges, éventuellement en mélange avec des alcanolmonoamines, ou
e) des mélanges d'acides dicarboxyliques en C₃-C₁₀ aliphatiques, saturés, d'acides dicarboxyliques à insaturation oléfinique, respectivement de leurs dérivés fonctionnels, tels que des anhydrides ou esters, et des acides ω-aminocarboxyliques contenant au moins trois atomes de carbone ou de leurs lactames avec des polyamines aliphatiques, qui contiennent au moins deux groupes amino primaires et au moins un autre groupe amino, c'est-à-dire, secondaire et/ou tertiaire, et des polyamines et des alcanolamines aliphatiques, cycloaliphatiques, araliphatiques ou hétérocycliques avec encore au moins un groupe amino primaire et éventuellement un groupe amino secondaire.

9. Utilisation de la solution aqueuse de résine selon au moins l'une des revendications 1 à 8, comme adjuvant dans l'industrie papetière, notamment pour augmenter la résistance à l'état humide du papier.
